# EUROPÄISCHE PATENTSCHRIFT

(11) **EP 2 998 204 B1**
(45) Veröffentlichungstag und Bekanntmachung des Hinweises auf die Patenterteilung: **08.01.2020**
(21) Anmeldenummer: 14192510.7
(22) Anmeldetag: 10.11.2014
(51) Int. Cl.: B62D 65/08, H02K 49/06, H02K 49/04, B23P 19/04

(54) **VORRICHTUNG UND VERFAHREN ZUM MONTIEREN EINES GUMMIPROFILS BZW. DICHTUNGSPROFILS**
Device and method for applying a sealing profile
Dispositif et procédé d'application d'un joint d'étanchéité

(30) Priorität: 18.09.2014 DE 102014113509
(43) Veröffentlichungstag der Anmeldung: 23.03.2016
(73) Patentinhaber: AyTec Automation GmbH, 93098 Mintraching (DE)
(72) Erfinder: Ruhland, Christian, 93161 Sinzing (DE)
(74) Vertreter: Glück Kritzenberger Patentanwälte PartGmbB

(56) Entgegenhaltungen:
- EP-A2- 1 361 648
- EP-A2- 1 522 444
- WO-A1-2014/085401
- DE-A1-102007 033 363
- JP-A- S53 114 243
- US-A- 1 326 660
- US-A- 3 284 886

## Beschreibung

Die Erfindung betrifft eine Vorrichtung und ein Verfahren zum Applizieren eines Dichtungsprofils auf eine Fläche. Derartige Vorrichtungen und Verfahren werden insbesondere im Automobilbau benötigt, wo Gummidichtungen auf Türeinfassungen, Schiebedacheinfassungen oder Motor/Kofferraumeinfassungen eines Kraftfahrzeugchassis aufgebracht werden müssen. Derartige Vorrichtungen enthalten in der Regel eine Handhabungsvorrichtung, die üblicherweise einen Roboterarm umfasst, der mit mehreren Freiheitsgraden bewegbar ist und daher in der Lage ist, das Dichtungsprofil exakt an der aufzubringenden Stelle der Türeinfassung oder Kofferraumeinfassung entlang zu führen, auch wenn diese Stellen nicht in einer Ebene liegen. Des Weiteren hat die Vorrichtung einen Führungskopf, der mittels des Roboterarms bewegt wird, um das Dichtungsprofil in Applikationsstellung der Fläche zuzuführen. Ein derartiger Führungskopf hat wenigstens ein Führungselement, üblicherweise mehrere Führungsrollen und/oder ein Führungsprofil.

Die Vorrichtung enthält weiterhin eine Vorschubvorrichtung, um das Dichtungsprofil vorzugsweise mit einer gewissen Stauchung der Fläche zuzuführen. Bislang wird hierfür ein Motorantrieb verwendet, der derart angesteuert wird, dass er das Dichtungsprofil ein klein wenig schneller ausstößt als der Bewegungsgeschwindigkeit des Führungselements relativ zur Fläche entspricht. Auf diese Weise wird das Dichtungsprofil beim Aufkleben auf die Fläche ein wenig gestaucht, so dass es sich nach dem Aufbringen auf die Fläche nicht aufgrund interner Spannung von der Fläche wieder ablösen kann.

Um diese Stauchung reproduzierbar zu realisieren, wird ständig die Geschwindigkeit des Führungskopfes relativ zur Fläche erfasst oder berechnet und die Vorschubvorrichtung entsprechend angesteuert. Die Geschwindigkeitssteuerung des Antriebsmotors der Treibrolle ist relativ aufwendig und erfordert eine genaue Erfassung der absoluten Geschwindigkeit des Führungskopfes aus den Bewegungsdaten der unterschiedlichen Komponenten der Handhabungsvorrichtung, d.h. Roboterarms.

Das Aufbringen des Dichtungsprofils auf die Fläche erfolgt dabei immer durch eine angetriebene Applikationsrolle, die genau am Aufbringungspunkt des Dichtungsprofils auf der Fläche angeordnet ist. Die Rolle wirkt dabei regelmäßig auf die Oberseite des Dichtungsprofils ein, welches üblicherweise als Hohlprofil ausgebildet ist und daher stark nachgibt. Diese Art der Krafteinleitung wird daher unter dem Aspekt der Definiertheit und Reproduzierbarkeit nicht als völlig befriedigend betrachtet.

Die DE 28 08 004 A1 zeigt einen Führungskopf zur Aufbringung eines Dichtungsprofils auf eine Glassscheibenkante. Der Führungskopf ist handgeführt und für eine automatisierte Serienproduktion im Kfz-Bereich nicht einsetzbar. Das Dichtungsprofil wird in dem Führungskopf durch eine Andruckrolle auf die Kante der Glasscheibe aufgedückt. Zudem sind zwei seitliche Andruckrollen vorgesehen, um das Profil gegen die beiden abgewandten Flächen der Glasscheibe zu drücken. Die DE 10 2007 033 363 A1 zeigt eine Vorrichtung, bei welcher ein Dichtungsprofil mittels einer angetriebenen Andruckrolle gegen eine Fläche gedrückt wird.

Es ist Aufgabe der vorliegenden Erfindung, eine Vorrichtung und ein Verfahren zum Applizieren eines Dichtungsprofils auf eine Fläche zu schaffen, die auf einfache Weise eine zuverlässige Verklebung des Dichtungsprofils auf der Fläche ermöglichen.

Diese Aufgabe wird durch eine Vorrichtung mit den Merkmalen des Anspruches 1 und ein Verfahren mit den Merkmalen des Anspruchs 14 gelöst. Vorteilhafte Weiterbildungen der Erfindung sind Gegenstand der zugeordneten abhängigen Ansprüche.

Im Gegensatz zum Stand der Technik wird das Dichtungsprofil ohne Verwendung einer angetriebenen Applikationsrolle auf die Fläche aufgebracht. Während die Verwendung einer angetriebenen Applikationsrolle im Stand der Technik als unabdingbar für eine definierte Aufbringung des Dichtungsprofils auf die Fläche betrachtet wurde, hat die vorliegende Erfindung erkannt, dass die Verwendung eines Führungskopfes mit einem Führungselement, insbesondere Führungsprofil in Verbindung mit einer Vorschubvorrichtung dazu verwendet werden kann, das Dichtungsprofil ohne eine angetriebene Applikationsrolle auf der Fläche aufzubringen. Bei richtiger Orientierung des Führungsprofils, d.h. in einem spitzen Winkel zur Fläche und entgegen der Bewegungsrichtung, ist es möglich, das Dichtungsprofil in gewünschter Positionierung und Orientierung auf die Fläche aufzubringen. Aufgrund der Schubkraft der Vorschubvorrichtung wird das Dichtungsprofil aus dem Führungsprofil heraus in einem spitzen Winkel auf die Fläche gedrückt, was dazu führt, dass das Dichtungsprofil mit seiner Klebefläche an der Fläche anhaftet.

Durch das Vorsehen eines insbesondere nicht angetriebenen Andruckelements, insbesondere einer Andruckrolle, welche das Dichtungsprofil in einem Abstand von seinem Aufbringungspunkt auf der Fläche andrückt, dass das aufgebrachte Dichtungsprofil noch einmal mit einer definierten Kraft auf die Fläche gedrückt wird, wodurch die Verklebung des Dichtungsprofils auf der Fläche fixiert wird. Statt der Verwendung einer angetriebenen Applikationsrolle wird erfindungsgemäß nun ohne angetriebene Applikationsrolle gearbeitet und das ohne Applikationsrolle mittels des Führungselements des Führungskopfes aufgebrachte Dichtungsprofil wird dann durch die in Bewegungsrichtung nachfolgende Andruckrolle stabilisiert. Das Führungselement kann eine Hohlprofil oder auch Führungsräder oder -bänder aufweisen. Vorzugsweise ist das Führungselement als Führungsprofil, insbesondere in der Art eines Hohlprofils ausgebildet, das dem Querschnittsprofil des Dichtungsprofils entspricht, weil damit eine besonders wirksame Ausrichtung der Ausstoßrichtung des Dichtungsprofils realisierbar ist. Erfindungsgemäß weist die Vorschubeinrichtung wenigstens ein angetriebenes Antriebselement auf.

Die Vorschubvorrichtung kann eine an sich bekannte Vorschubvorrichtung sein, bei der wenigstens eine angetriebene Treibrolle an seinem Umfang in Form- und/oder Friktionseingriff mit dem Dichtungsprofil tritt und somit das Dichtungsprofil mit einer minimal größeren Geschwindigkeit aus dem Führungskopf herausschiebt als es der Bewegungsgeschwindigkeit des Führungskopfes entlang der Fläche entspricht. Dadurch wird das Dichtungsprofil, welches vorzugsweise ein Gummiprofil ist, etwas gestaucht auf die Fläche aufgebracht. Hierdurch wird vermieden, dass das Dichtungsprofil beim Aufbringen unter innere Spannung gerät, was bei kurvigen Konturen zu einem Ablösen des Dichtungsprofils führen könnte.

Vorzugsweise jedoch wirkt die Treibrolle der Vorschubvorrichtung mit einem konstanten Drehmoment auf das Dichtungsprofil ein. Dies steht im Gegensatz zu den bisher verwendeten Verfahren, bei denen die Treibrolle mit Geschwindigkeitsüberschuss angetrieben wurde. Das definierte Drehmoment an der Treibrolle führt dazu, dass das Dichtungsprofil mit einer konstanten Schubkraft auf die Fläche ausgestoßen wird, was unabhängig vom Konturverlauf zu konstanten Rahmenbedingungen beim Aufbringen des Dichtungsprofils führt.

Um das konstante Drehmoment auf die Treibrolle zu übertragen wird vorzugsweise eine Dauerschlupfkupplung verwendet. Diese hat den Vorteil, dass sie unabhängig von der Antriebsgeschwindigkeit immer das gleiche Drehmoment auf die Treibrolle überträgt. Es ist deshalb ausreichend, den Antriebsmotor für die Treibrolle immer mit einer größeren Geschwindigkeit (wenn diese direkt mittels der Treibrollen auf das Dichtungsprofile wirken würden) als der Geschwindigkeit des Führungskopfes relativ zur Fläche laufen zu lassen. Die Dauerschlupfkupplung wandelt diesen Geschwindigkeitsunterschied in ein konstantes Drehmoment und ansonsten in Wirbelstromverluste oder Reibungsverluste um und sorgt damit dafür, dass unabhängig von der Abtriebsgeschwindigkeit, d.h. der Geschwindigkeit, mit welcher das Dichtungsprofil auf die Fläche überführt wird, immer eine konstante Schubkraft auf das Dichtungsprofil einwirkt. Dies hat zum einen den Vorteil, dass die Stauchung des Dichtungsprofils beim Aufbringen auf die Fläche an jedem Punkt der Kontur identisch ist, auch wenn der Führungskopf entlang der Konturmit etwas unterschiedlicher Geschwindigkeit bewegt wird und dass zum anderen keine Erfassung der Geschwindigkeit des Führungskopfes relativ zur Fläche mehr erfolgen muss, um eine gewünschte Stauchung des Dichtungsprofils beim Aufbringen auf die Fläche zu realisieren.

Die Treibrolle der Vorschubvorrichtung wirkt vorzugsweise auf einen Vollgummiteil des Dichtungsprofils, wodurch eine zuverlässigere Krafteinleitung auf das Dichtungsprofil realisiert wird, da der Vollgummiteil nicht so nachgiebig ist, wie eine Hohlgummiabschnitt, auf welchen bislang die Applikationsrollen gewirkt haben.

Vorzugsweise ist die Dauerschlupfkupplung durch eine nach dem magnetischen Hystereseprinzip arbeitende Dauerschlupfkupplung gebildet, die weitgehend verschleiß- und wartungsfrei arbeitet, obwohl auch mechanische oder hydraulische Friktionskupplungen (Drehmomentwandler) verwendet werden können.

Die Kraftübertragung von der Treibrolle auf das Dichtungsprofil findet in bekannter Weise über eine Antriebsfläche der Treibrolle statt, die in der Regel durch eine Umfangsfläche, insbesondere den Außenumfang der Treibrolle gebildet ist.

Vorzugsweise hat die insbesondere nicht angetriebene Andruckrolle eine Umfangsnut zum Umgreifen der Oberseite des auf die Fläche überführten Dichtungsprofils. Hierdurch wird die Andruckrolle aufgrund des Formeingriffs der Nut auf der Oberseite des Dichtungsprofils relativ zum Dichtungsprofil definiert geführt, so dass die Andruckrolle auch bei schwierigen Konturverläufen dem Dichtungsprofil folgt.

Hierfür ist die Andruckrolle vorzugsweise an einem Schwenkarm gelagert ist, der an dem Führungskopf in der Applikationsstellung um eine Achse parallel zur Applikationsseite des Führungskopfes schwenkbar gelagert ist. Die Andruckrolle ist damit vertikal beweglich und kann durch eine Federeinrichtung elastisch gegen das Dichtungsprofil gedrückt werden.
Die in der Erfindung verwendete Federeinrichtung kann z.B. eine Schraubenfeder oder ein Zug/Druckzylinder, z.B. Hydraulik- oder Pneumatikzylinder oder Federzylinder/Federstößel sein.

Vorzugsweise ist der Schwenkarm zusätzlich an dem Führungskopf in Applikationsstellung um eine Achse senkrecht zur Applikationsseite schwenkbar gelagert. Die Andruckrolle kann somit seitlich bewegt werden und verliert ihren Kontakt mit dem Dichtungsprofil auch bei stark gekrümmten Konturverläufen nicht.

In einer weiteren vorteilhaften Ausführungsform der Erfindung ist die Andruckrolle an einer Drehachse gehalten, die in Applikationsstellung des Führungskopfes in Führungen senkrecht zur Applikationsseite verschiebbar gehalten ist. Auch hier kann aufgrund des ermöglichten vertikalen Spiels die Andruckrolle federnd gegen das Dichtungsprofil vorgespannt werden. In diesem Fall ist vorzugsweise die Andruckrolle seitlich bewegbar an dem Führungskopf gehalten. So kann z.B. die Drehachse der Führung länger als die Andruckrolle sein, womit die Andruckrolle auf der Drehachse in axialer Richtung beweglich ist. Auch hier kann die Andruckrolle seitlich dem Dichtungsprofil auch bei stark gekrümmten Konturverläufen folgen.

In einer vorteilhaften Weiterbildung der Erfindung ist die Andruckrolle unmittelbar am oder nach dem Aufbringungspunkt des Dichtungsprofils auf der Fläche angeordnet. Während der die Vorschubvorrichtung in Verbindung mit dem Führungskopf und seine Orientierung relativ zur Fläche eine definierte Überführung des Dichtungsprofils auf die Fläche sicherstellen, wird durch diese vorteilhafte Anordnung sichergestellt, dass die korrekte Aufbringung durch eine örtlich direkt nachgeordneten Aufbringung eines Andruck auf das Dichtungsprofil in Richtung der Fläche durch die Andruckrolle mit definierter Kraft fixiert wird.

Vorzugsweise entspricht das Führungsprofil im Führungskopf zumindest in etwa der Außenkontur des Dichtungsprofils. Das Führungsprofil ist insbesondere ein Hohlprofil, dessen Kontur zumindest ungefähr, voreilhafterweise mit etwas Spiel exakt der Außenkontur des Dichtungsprofils entspricht. Durch dieses Hohlprofil wird das Dichtungsprofil vor dem Aufbringen auf die Fläche hindurchgeführt. Hierdurch wird erreicht, dass das Dichtungsprofil in eine definierte Richtung aus dem Führungskopf ausgestoßen wird und dass sich das Dichtungsprofil beim Einleiten des Drehmomentes von der Treibrolle möglichst wenig deformiert. Diese Ausführungsform der Erfindung unterstützt somit die konstanten Betriebsbedingungen für die Aufbringung des Dichtungsprofil, die zu einer deutlich verbesserten Adhäsion und Genauigkeit der Aufbringung der Aufbringung des Dichtungsprofils auf die Fläche führt.

Vorzugsweise weist der Führungskopf ein Gehäuse auf, in welchem in welchem zumindest die Treibrolle der Vorschubvorrichtung und das Führungsprofil angeordnet sind. Auf diese Weise können die effektiven Komponenten des Führungskopfes, wie z.B. der Antriebsmotor, die Dauerschlupfkupplung, die Treibrolle und evtl. eine Gegenrolle in der Arbeitsumgebung geschützt angeordnet werden. Dies verringert u.a. auch die Unfallgefahr am Arbeitsplatz, während es andererseits sicherstellt, dass die einzelnen Komponenten im Führungskopf gegen versehentliche Beschädigung durch Fremdeinwirkung geschützt werden. Die im Gehäuse angeordneten Komponenten sind so auch besser vor Verschmutzung bzw. Verstauben geschützt, wodurch stabilere Betriebsbedingungen geschaffen werden und die Zuverlässigkeit der Vorrichtung insgesamt steigt.

Vorzugsweise hat dass die Vorschubvorrichtung eine bezüglich des Dichtungsprofils gegenüber der Treibrolle angeordnet Gegenrolle oder zweite Treibrolle, wobei zwischen der Treibrolle und der Gegenrolle bzw. zweiten Treibrolle ein Aufnahmebereich für einen massiven Teil des Dichtungsprofils gebildet ist. Auf diese Weise hat die Friktion bzw. der Eingriff der Treibrolle an dem Dichtungsprofil nicht die Aufgabe, eine Friktion zu überwinden, die dadurch entsteht, dass das Dichtungsprofil an einer festen Wand des Führungskopfes entlang gleitet. Es wird hiermit sichergestellt, dass das Drehmoment der Treibrolle auch tatsächlich in den Vorschub des Dichtungsprofils geht und nicht als Friktionsverlust verloren geht.

Es ist nach dieser Ausführungsform der Erfindung ebenfalls möglich, die Vorschubvorrichtung mit wenigstens einer weiteren Treibrolle zu versehen, die gegenüber der Treibrolle angeordnet ist, wobei zwischen der Treibrolle und der weiteren Treibrolle ein Aufnahmebereich für wenigstens einen Teil des Dichtungsprofils gebildet ist. Auch diese Ausführungsform stellt sicher, dass das von den Treibrollen aufgebrachte Drehmoment völlig in einen Vorschub des Dichtungsprofils umgesetzt wird.

In einer vorteilhaften Weiterbildung der Erfindung ist der Aufnahmebereich zwischen Treibrolle und Gegenrolle oder zwischen der Treibrolle und der weiteren Treibrolle für die Aufnahme eines massiven Teils des Dichtungsprofils konzipiert. Insbesondere Dichtungsprofile im Kfz-Bereich enthalten in der Regel ein Hohlprofil, um die nötige Elastizität bereitzustellen, die für eine sichere Abdichtung des Türbereiches oder Kofferraumbereichs notwendig ist. Ein Hohlprofil hat wiederum den Nachteil, dass es bei Krafteinleitung sehr stark nachgibt, was erschwert, eine Kraft definiert auf das Hohlprofil einzuleiten. In der Regel haben derartige Hohlprofile jedoch auch einen massiven Teil insbesondere in dem Abschnitt, in welchem das Dichtungsprofil auf der Fläche verklebt wird. Vorzugsweise ist der Aufnahmebereich exakt für diesen massiven Teil vorgesehen, so dass das aufgebrachte Drehmoment nicht in einer Verformung des Dichtungsprofils umgesetzt wird, sondern tatsächlichen Vorschub.

Vorzugsweise hat die Handhabungsvorrichtung einen mit mehreren Freiheitsgraden bewegbaren Roboterarm, der konzipiert ist, den Führungskopf entlang der Fläche zu bewegen. Diese Technologie ermöglicht ein zuverlässiges Bewegen und Orientieren des Führungskopfes relativ zur Fläche.

Es erübrigt sich zu sagen, dass die Vorrichtung insbesondere für ein Dichtungsprofil mit einer selbstklebenden Fläche konzipiert ist, so dass das Dichtungsprofil nach dem Aufbringen auf der Fläche selbsttätig haften bleibt. Eine Klebeschicht kann jedoch alternativ mittels des Führungskopfes vor dem Aufbringen des Dichtungsprofils auf die Fläche auf eine der beiden Komponenten aufgebracht werden. Vorzugsweise ist auf dem Führungskopf eine Abziehvorrichtung zum Entfernen eines Abdeckbands von einer Klebefläche des Dichtungsprofils angeordnet, wodurch das Dichtungsprofil erst unmittelbar vor dem Aufbringen in einen selbstklebefähigen Zustand gebracht wird. Die Handhabung in der Vorrichtung wird somit durch die Selbstklebefläche des Dichtungsprofils nicht beeinträchtigt.

Vorzugsweise ist die Treibrolle in dem Führungskopf unmittelbar vor dem Führungsprofil angeordnet. Dadurch tritt nur wenig Friktion zwischen Führungskopf und Dichtungsprofil auf.

Die Erfindung betrifft ebenfalls ein Verfahren zum Aufbringen eines Dichtungsprofils auf eine Fläche, wobei eine Vorrichtung gemäß einem der Ansprüche 1-13 verwendet wird.

Unter anderem wird das Andruckelement bzw. die Andruckrolle durch eine Federeinrichtung auf die Fläche vorgespannt. Diese Lösung ist technisch einfach zu realisieren. Statt einer Andruckrolle kann als Andruckelement auch ein umlaufendes Band oder ein friktionsverringert beschichtetes Gleitelement oder ähnliche Lösungen verwendet werden.

Vorzugsweise wird das Dichtungsprofil 5 mm bis 3 cm nach dem Aufbringungspunkt des Dichtungsprofils auf die Fläche angedrückt. Der definierte Aufbringungspunkt des Dichtungsprofils wird damit umgehend nach dem Aufbringen stabilisiert bzw. fixiert.

Vorzugsweise wird das Dichtungsprofil mit einem konstanten Schub aus dem Führungskopf ausgeschoben wird. Die Vorteile hierfür sind oben im Zusammenhang mit der Beschreibung der erfindungsgemäßen Vorrichtung beschrieben. Die oben genannten Ausführungsformen der Erfindung lassen sich beliebig miteinander kombinieren.

Einzelne Komponenten bzw. Merkmale der Erfindung, wie sie in den Ansprüchen beschrieben ist, können einfach oder mehrfach vorgesehen sein.

Die Fläche ist insbesondere durch eine Einfassung an einem Kraftfahrzeugchassis gebildet, z.B. eine Türeinfassung, Motorhauben oder Kofferraumeinfassung oder eine Schiebedachöffnung. Die Kontur des aufzubringenden Dichtungsprofils ist entsprechend vorgegeben und wird über die Handhabungsvorrichtung, üblicherweise mittels eines mit mehreren Freiheitsgraden angetriebenen Roboterarms nachgefahren, was dazu führt, dass das Dichtungsprofil genau entsprechend der Kontur aufgebracht wird. Die Bewegungssteuerung als auch die Steuerung der Vorschubvorrichtung und gegebenenfalls einer Abziehvorrichtung werden dabei üblicherweise von einer Maschinensteuerung übernommen, was an sich bekannt ist.

Nachfolgend wird die Erfindung beispielsweise anhand der schematischen Zeichnung beschrieben. In dieser zeigen:
- Fig. 1: eine perspektivische Darstellung eines Führungskopfes mit nachgeordneter Andruckrolle;
- Fig. 2: eine Seitenansicht des Führungskopfes aus Fig. 1; und
- Fig. 3: eine Aufsicht auf den Führungskopf aus Fig. 1.

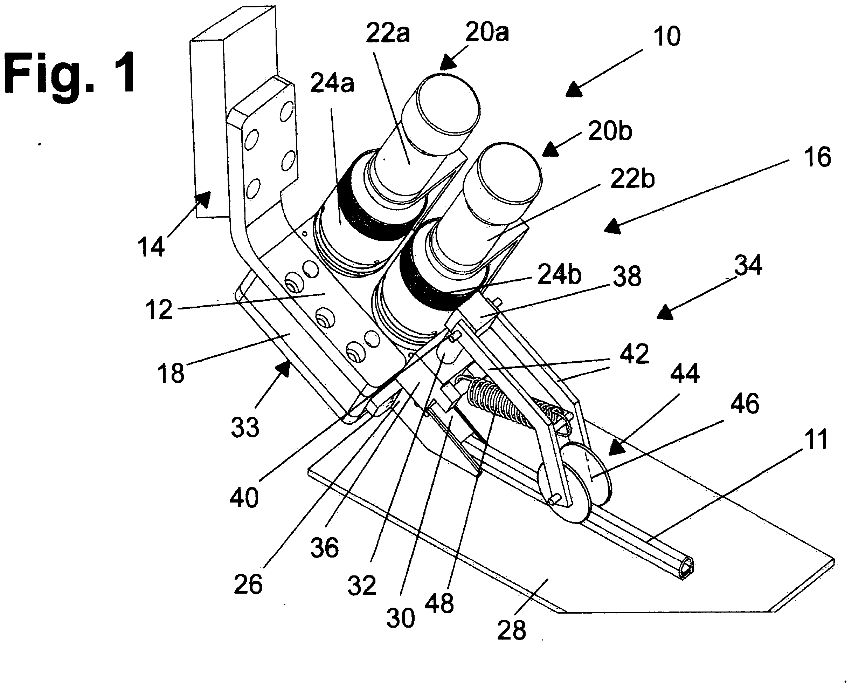

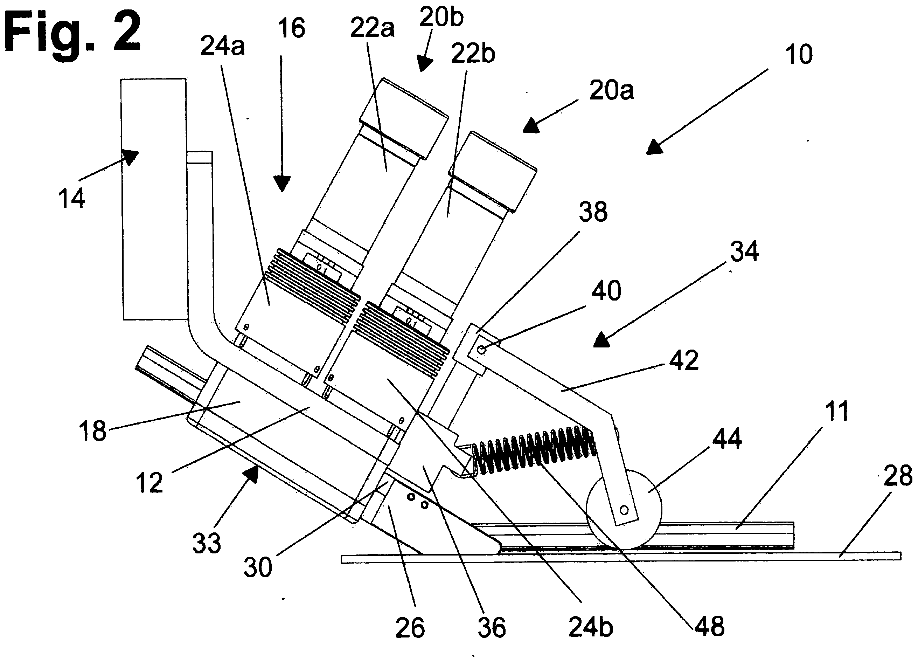

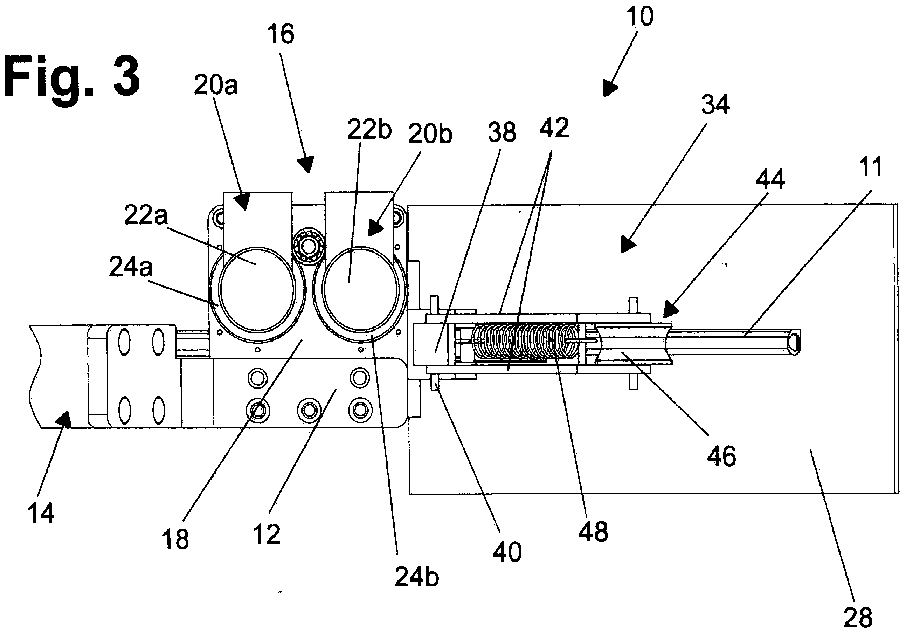

Fig. 1 zeigt eine perspektivische Ansicht des proximalen Teils einer Vorrichtung 10 zum Applizieren eines Dichtungsprofils 11 auf eine Tür- oder Schiebedachöffnung eines Kraftfahrzeugchassis. Die Figuren 2 und 3 die Seitenansicht und Aufsicht. Die Figuren zeigen das freie Montageende 12 einer Handhabungsvorrichtung, ausgebildet als Roboterarm 14. An dem Montageende 12 des Roboterarms 14 ist ein Führungskopf 16 befestigt, der ein Gehäuse bzw. Führungskopfkörper 18 umfasst, auf dem zwei Antriebseinheiten 20a,b gehalten sind. Jede Antriebseinheit 20a,b besteht jeweils aus einem Antriebsmotor 22a,b, der über eine Dauerschlupfkupplung 24a,b mit einer im Führungskopfkörper angeordneten Treibrolle (nicht dargestellt) verbunden ist. Die Treibrolle ist im Führungskopfkörper 18 im Bereich eines Führungsprofils 26 gegenüber einer Gegenrolle (nicht dargestellt) angeordnet und wirkt mit einer Umfangsfläche auf das Dichtungsprofil ein, um dieses mit einem definierten Schubmoment aus dem Führungskopf 16 auf eine Dichtungsfläche 28 eines Kfz-Chassis zu schieben.

An dem Führungskopfkörper 18 ist eine Halterung 30 mit einer ersten Drehachse 32 befestigt, die sich senkrecht zur Unterseite 33 (auch "Applikationsseite") des Führungskopfkörpers 18 erstreckt und auf der eine Andruckvorrichtung 32 um die erste Drehachse 31 drehbar gehalten ist.

Die Andruckvorrichtung 34 enthält einen auf der ersten Drehachse 32 drehbar gehaltenen unteren Trägerkörper 36 und einen synchron mit diesem drehbar gehaltenen oberen Trägerkörper 38. Der obere Trägerkörper 38 trägt eine zweite Drehachse 40, die sich parallel zur Unterseite 33 des Führungskopfkörpers 18 erstreckt. An dieser ist eine Tragschwinge 42 drehbar gehalten, an deren äußerem Ende eine Andruckrolle 44 drehbar gelagert ist. Die Andruckrolle 44 hat an ihrem Außenumfang ein Nutprofil 46, welches komplementär zur Oberseite des Dichtungsprofils 11 ausgebildet ist. An der Tragschwinge 42 ist des Weiteren ein erstes Ende einer Spannfeder 48 oder eines Spannzylinders gehalten, deren zweites Ende an dem unteren Trägerkörper 36 befestigt ist. Auf diese Weise wird die Andruckrolle 44 mittels der Spannfeder 48 oder des Spannzylinders und der Tragschwinge 42 gegen die Oberseite des Dichtungsprofils 11 gedrückt, nachdem dieses mittels des Führungskopfes 16 auf die Dichtungsfläche 28 des Kfz-Chassis aufgebracht wurde. Die Neigung des Führungskopfes 16 bzw. dessen Unterseite 33 relativ zur Dichtungsfläche 28 ist dabei in weiten Grenzen unbeachtlich. Über die erste Drehachse 32 kann die Andruckrolle 44 sogar dann dem Dichtungsprofil 11 folgen, wenn sich die die Aufbringungsrichtung des Dichtungsprofils 11 auf der Dichtungsfläche 28 ändert. Die Variabilität in der Bewegung der Andruckrolle 44 ist damit parallel als auch senkrecht zur Unterseite 33 des Führungskopfes 16 gegeben.

Während der Führungskopf 16 das Dichtungsprofil 11 mit einem definierten Schubmoment und damit mit einer definierten Stauchung auf die Dichtungsfläche 28 aufbringt, wird durch die Andruckrolle 44 und deren definierte Andruckkraft auf die Oberseite des Dichtungsprofils 11 noch einmal der Klebekontakt des Dichtungsprofils 11 auf der Dichtungsfläche 28 verbessert. Die Klebeverbindung erfolgt regelmäßig, aber nicht notwendigerweise mittels einer an der Unterseite des Dichtungsprofils 11 ausgebildeten Klebefläche.

Der Führungskopf 16 kann noch weitere Vorrichtungen tragen, wie z.B. eine Abziehvorrichtung für ein auf der Klebefläche des Dichtungsprofil vorgesehenes Abdeckband.

Die Erfindung ist nicht auf das aufgeführte Ausführungsbeispiel beschränkt, sondern kann innerhalb des Schutzbereichs der nachfolgenden Ansprüche variiert werden.

## Patentansprüche

1. Vorrichtung zum Applizieren eines Dichtungsprofils (11) auf eine Fläche (28), umfassend eine Handhabungsvorrichtung (14) umfassend einen Roboterarm zur Bewegung und Führung eines Führungskopfes (16) in einer Applikationsstellung, um das Dichtungsprofil entlang einer definierten Kontur auf der Fläche (28) aufzubringen, wobei in Verbindung mit dem Führungskopf (16) eine Vorschubvorrichtung (20a,b) angeordnet ist, welche Vorschubeinrichtung wenigstens ein angetriebenes Antriebselement aufweist, um das Dichtungsprofil (11) der Fläche (28) mit einer Stauchung zuzuführen, wobei der Führungskopf wenigstens ein Führungselement (26) zur Führung des Dichtungsprofils aufweist, welches Führungselement (26) in der Applikationsstellung unter einem entgegen der Bewegungsrichtung des Führungskopfes orientierten spitzen Winkel relativ zur Fläche orientierbar ist, um das Dichtungsprofil ohne Zwischenschaltung einer angetriebenen Applikationsrolle auf die Fläche zu überführen, und dass an dem Führungskopf (16) ein nicht angetriebenes Andruckelement (44), insbesondere Andruckrolle, angeordnet ist, welches Andruckelement dazu konzipiert ist, in der Applikationsstellung mittels einer Federeinrichtung (48) unter Vorspannung gegen das auf die Fläche (28) überführte Dichtungsprofil (11) anzuliegen.

2. Vorrichtung nach Anspruch 1, **dadurch gekennzeichnet, dass** das wenigstens eine angetriebene Antriebselement eine Treibrolle mit einer Antriebsfläche aufweist, die mit dem Dichtungsprofil (11) in Friktions- und/oder Formeingriff steht.

3. Vorrichtung nach Anspruch 2, **dadurch gekennzeichnet, dass** die Treibrolle mit einem konstanten Drehmoment auf das Dichtungsprofil (11) einwirkt.

4. Vorrichtung nach Anspruch 3, **dadurch gekennzeichnet, dass** die Treibrolle (12a,b) über eine Dauerschlupfkupplung (14a,b) mit einem Antriebsmotor (16a,b) der Vorschubvorrichtung verbunden ist.

5. Vorrichtung nach Anspruch 4, **dadurch gekennzeichnet, dass** die Dauerschlupfkupplung (14a,b) durch eine nach dem magnetischen Hystereseprinzip arbeitende Dauerschlupfkupplung gebildet ist.

6. Vorrichtung nach einem der vorhergehenden Ansprüche, **dadurch gekennzeichnet, dass** die Andruckrolle (44) eine Umlaufnut (46) zum Umgreifen der Oberseite des auf die Fläche (28) überführten Dichtungsprofils (11) aufweist.

7. Vorrichtung nach einem der vorhergehenden Ansprüche, **dadurch gekennzeichnet**, das der Führungskopf eine Applikationsseite (33) aufweist, die in der Applikationsstellung des Führungskopfes der Fläche (28) zugewandt ist, und dass die Andruckrolle (44) an einem Schwenkarm (42) gelagert ist, der an dem Führungskopf (16) in der Applikationsstellung um eine zweite Drehachse (40) parallel zur Applikationsseite (33) schwenkbar gelagert ist.

8. Vorrichtung nach Anspruch 7, **dadurch gekennzeichnet, dass** der Schwenkarm (42) zusätzlich an dem Führungskopf (16) in Applikationsstellung um eine erste Drehachse (32) senkrecht zur Applikationsseite (33) schwenkbar gelagert ist.

9. Vorrichtung nach einem der vorhergehenden Ansprüche, **dadurch gekennzeichnet, dass** die Andruckrolle (44) 1 bis 10 cm nach dem Aufbringungspunkt des Dichtungsprofils (11) auf der Fläche (28) angeordnet ist.

10. Vorrichtung nach einem der vorhergehenden Ansprüche, **dadurch gekennzeichnet, dass** das Führungselement (26) als Führungsprofil mit einem Hohlprofil ausgebildet ist, das zumindest in etwa der Außenkontur des Dichtungsprofils (11) entspricht.

11. Vorrichtung nach einem der vorhergehenden Ansprüche, **dadurch gekennzeichnet, dass** der Führungskopf (16) ein Gehäuse (18) aufweist, in welchem in welchem zumindest die Treibrolle und zumindest ein Teil des Führungselements (26) angeordnet sind.

12. Vorrichtung nach einem der vorhergehenden Ansprüche, **dadurch gekennzeichnet, dass** die Handhabungsvorrichtung (14) einen mit mehreren Freiheitsgraden bewegbaren Roboterarm aufweist, der konzipiert ist, den Führungskopf (16) entlang der Fläche (28) zu bewegen.

13. Vorrichtung nach einem der vorhergehenden Ansprüche, **dadurch gekennzeichnet, dass** auf dem Führungskopf (16) eine Abziehvorrichtung zum Entfernen eines Abdeckbands von einer Klebefläche des Dichtungsprofils (11) angeordnet ist.

14. Verfahren zum Aufbringen eines Dichtungsprofils (11) auf eine Fläche (28), **dadurch gekennzeichnet, dass** eine Vorrichtung nach einem der Ansprüche 1-13 verwendet wird.

15. Verfahren nach Anspruch 14, **dadurch gekennzeichnet, dass** das Dichtungsprofil (11) in etwa 1cm bis 10 cm, insbesondere 2cm bis 6 cm nach dem Aufbringungen auf die Fläche (28) mittels des Andruckelements (44) angedrückt wird.

16. Verfahren nach einem der Ansprüche 14 bis 15, **dadurch gekennzeichnet, dass** das Dichtungsprofil (11) mit einem konstanten Schub aus dem Führungskopf (16) ausgeschoben wird.

17. Verfahren nach einem der Ansprüche 14 bis 16, **dadurch gekennzeichnet, dass** das Dichtungsprofil (11) abgesehen von seinem Ausschieben mittels des Führungskopfes (16) nach dem Abziehen eines Abdeckbandes von einer Klebefläche des Dichtungsprofils bis einschließlich dem Auftreffen und Anhaften des Dichtungsprofils auf der Fläche (28) keiner weiteren Einwirkung unterworfen wird.

## Claims

1. Device for applying a sealing profile (11) to a surface (28), comprising a handling device (14) comprising a robotic arm for moving and guiding a guide head (16) in an application position to apply the sealing profile along a defined contour on the surface (28), wherein an advancing device (20a, b) is arranged in connection to the guide head (16), said advancing device having at least one driven drive element to supply the sealing profile (11) to the surface (28) with a compression, wherein the guide head has at least one guide element (26) for guiding the sealing profile, said guide element (26) is orientable in the application position at an acute angle relative to the surface and oriented counter to the direction of movement of the guide head in order to transfer the sealing profile to the surface without interposing a driven application roller, and that a non-driven pressure element (44), in particular a pressure roller, is arranged on the guide head (16), said pressure element is designed to rest against the sealing profile (11) in the application position by means of a biased spring device (48), while the sealing profile is guided onto the surface (28).

2. Device according to claim 1, **characterized in that** the at least one driven drive element has a drive roller with a drive surface which is in frictional and/or form-fit engagement with the sealing profile (11).

3. Device according to claim 2, **characterized in that** the drive roller acts on the sealing profile (11) with a constant torque.

4. Device according to claim 3, **characterized in that** the drive roller (12a, b) is connected to a drive motor (16a, b) of the advancing device via a permanent slip clutch (14a, b).

5. Device according to claim 4, **characterized in that** the permanent slip clutch (14a, b) is formed by a permanent slip clutch functioning according to the magnetic hysteresis principle.

6. Device according to any one of the preceding claims, **characterized in that** the pressure roller (44) has a circumferential groove (46) for encompassing the upper side of the sealing profile (11) transferred to the surface (28).

7. Device according to any one of the preceding claims, **characterized in that** the guide head has an application side (33) which faces the surface (28) in the application position of the guide head, and that the pressure roller (44) is mounted on a pivot arm (42) which is mounted on the guide head (16) in the application position to pivot about a second axis of rotation (40) parallel to the application side (33).

8. Device according to claim 7, **characterized in that** the pivot arm (42) is additionally mounted on the guide head (16) in the application position to pivot about a first axis of rotation (32) perpendicular to the application side (33).

9. Device according to any one of the preceding claims, **characterized in that** the pressure roller (44) is arranged on the surface (28) 1 to 10 cm after the application point of the sealing profile (11).

10. Device according to any one of the preceding claims, **characterized in that** the guide element (26) is designed as a guide profile with a hollow profile that corresponds at least approximately to the outer contour of the sealing profile (11).

11. Device according to any one of the preceding claims, **characterized in that** the guide head (16) has a housing (18) in which in which at least the driver roller and at least a part of the guide element (26) are arranged.

12. Device according to any one of the preceding claims, **characterized in that** the handling device (14) has a robotic arm movable with multiple degrees of freedom, which is designed to move the guide head (16) along the surface (28).

13. Device according to any one of the preceding claims, **characterized in that** a removal device, for removing a cover strip from an adhesive surface of the sealing profile (11), is arranged on the guide head (16).

14. Method for applying a sealing profile (11) onto a surface (28), **characterized in that** a device according to any one of claims 1-13 is used.

15. Method according to claim 14, **characterized in that** the sealing profile (11) is pressed by means of the pressure element (44) at approximately 1 cm to 10 cm, in particular 2 cm to 6 cm after the applications onto the surface (28).

16. Method according to any one of claims 14 to 15, **characterized in that** the sealing profile (11) is expelled from the guide head (16) at a constant impetus.

17. Method according to any one of claims 14 to 16, **characterized in that** the sealing profile (11), aside from its expulsion by means of the guide head (16), is not subjected to any further action after the removal of a cover strip from an adhesive surface of the sealing profile up to and including the striking and adhering of the sealing profile on the surface (28).

## Revendications

1. Dispositif pour appliquer un profilé d'étanchéité (11) sur une surface (28), comprenant un dispositif de manipulation (14) comprenant un bras de robot pour déplacer et guider une tête de guidage (16) dans une position d'application pour appliquer le profilé d'étanchéité le long d'un contour défini sur la surface (28), dans lequel un dispositif d'avance (20a, b) est disposé en liaison avec la tête de guidage (16), lequel dispositif d'avance présente au moins un élément d'entraînement entraîné afin d'amener le profilé d'étanchéité (11) à la surface (28) avec une compression, dans lequel la tête de guidage présente au moins un élément de guidage (26) pour guider le profilé d'étanchéité, lequel élément de guidage (26) peut, dans la position d'application, être orienté par rapport à la surface selon un angle aigu orienté à l'opposé de la direction de déplacement de la tête de guidage afin de transférer le profilé d'étanchéité sur la surface sans interposition d'un rouleau d'application entraîné, et dans lequel un élément presseur non entraîné (44), en particulier un rouleau presseur, est disposé sur la tête de guidage (16), lequel élément presseur est conçu pour venir s'appuyer, dans la position d'application, contre le profilé d'étanchéité (11) transféré sur la surface (28) en étant précontraint à l'aide d'un moyen élastique (48).

2. Dispositif selon la revendication 1, **caractérisé en ce que** ledit au moins un élément d'entraînement entraîné présente un rouleau entraîneur avec une surface d'entraînement qui est en prise par friction et/ou par forme avec le profilé d'étanchéité (11).

3. Dispositif selon la revendication 2, **caractérisé en ce que** le rouleau entraîneur agit sur le profilé d'étanchéité (11) avec un couple constant.

4. Dispositif selon la revendication 3, **caractérisé en ce que** le rouleau entraîneur (12a, b) est relié à un moteur d'entraînement (16a, b) du dispositif d'avance par l'intermédiaire d'un accouplement à glissement continu (14a, b).

5. Dispositif selon la revendication 4, **caractérisé en ce que** l'accouplement à glissement continu (14a, b) est formé par un accouplement à glissement continu fonctionnant selon le principe de l'hystérésis magnétique.

6. Dispositif selon l'une des revendications précédentes, **caractérisé en ce que** le rouleau presseur (44) présente une rainure circonférentielle (46) pour venir en prise autour du côté supérieur du profilé d'étanchéité (11) transféré sur la surface (28).

7. Dispositif selon l'une des revendications précédentes, **caractérisé en ce que** la tête de guidage présente un côté d'application (33) qui, dans la position d'application de la tête de guidage, est tourné vers la surface (28), et que le rouleau presseur (44) est monté sur un bras pivotant (42) qui est monté pivotant sur la tête de guidage (16) dans la position d'application autour d'un deuxième axe de rotation (40) parallèle au côté d'application (33).

8. Dispositif selon la revendication 7, **caractérisé en ce que** le bras pivotant (42) est en outre monté pivotant sur la tête de guidage (16) dans la position d'application autour d'un premier axe de rotation (32) perpendiculaire au côté application (33).

9. Dispositif selon l'une des revendications précédentes, **caractérisé en ce que** le rouleau presseur (44) est disposé de 1 à 10 cm après le point d'application du profilé d'étanchéité (11) sur la surface (28).

10. Dispositif selon l'une des revendications précédentes, **caractérisé en ce que** l'élément de guidage (26) est réalisé sous la forme d'un profilé de guidage avec un profilé creux qui correspond au moins approximativement au contour extérieur du profilé d'étanchéité (11).

11. Dispositif selon l'une des revendications précédentes, **caractérisé en ce que** la tête de guidage (16) présente un boîtier (18) dans lequel sont disposés au moins le rouleau entraîneur et au moins une partie de l'élément de guidage (26).

12. Dispositif selon l'une des revendications précédentes, **caractérisé en ce que** le dispositif de manipulation (14) présente un bras de robot mobile possédant plusieurs degrés de liberté qui est conçu pour déplacer la tête de guidage (16) le long de la surface (28).

13. Dispositif selon l'une des revendications précédentes, **caractérisé en ce que** sur la tête de guidage (16) est disposé un dispositif d'arrachement pour retirer une bande de recouvrement d'une surface adhésive du profilé d'étanchéité (11).

14. Procédé pour appliquer un profilé d'étanchéité (11) sur une surface (28), **caractérisé en ce que** l'on utilise un dispositif selon l'une des revendications 1 à 13.

15. Procédé selon la revendication 14, **caractérisé en ce que** le profilé d'étanchéité (11) est pressé sur environ 1 cm à 10 cm, en particulier 2 cm à 6 cm, après avoir été appliqué sur la surface (28) au moyen de l'élément presseur (44).

16. Procédé selon l'une des revendications 14 à 15, **caractérisé en ce que** le profilé d'étanchéité (11) est expulsé de la tête de guidage (16) avec une poussée constante.

17. Procédé selon l'une des revendications 14 à 16, **caractérisé en ce que** le profilé d'étanchéité (11), en dehors de son expulsion au moyen de la tête de guidage (16), n'est soumis à aucune autre action après l'arrachement d'une bande de recouvrement d'une surface adhésive du profilé d'étanchéité jusqu'à, y compris, la rencontre du profilé d'étanchéité avec la surface (28) et son adhérence sur celle-ci.
